# EUROPEAN PATENT APPLICATION

(11) **EP 0 955 523 A1**
(43) Date of publication of application: **10.11.1999**
(21) Application number: 98952753.6
(22) Date of filing: 12.11.1998
(51) Int. Cl.: G01D 5/25, H01H 19/58

(54) **INCREMENTAL CODING DEVICE AND PROCESS FOR ITS FABRICATION**

(30) Priority: 14.11.1997 ES 9702395
(71) Applicant: NAVARRA DE COMPONENTES ELECTRONICOS, S.A., E-31500 Tudela (Navarra) (ES)
(72) Inventor: CASTELLANO ALDAVE, Jesús Carlos, E-31500 Tudela (ES)
(74) Representative: Manresa Val, Manuel
(86) International application number: ES9800308
(87) International publication number: WO9926041

(57) **Abstract**

The device comprises a coding disc (10) mounted on a rotary axis and including an electroconductor track (12) with branches (13), materialized on an electro-insulating support (14) and collectors arms (21a, 23a, 23b) associated to said track and united to terminals (22, 24a, 24b) which bear elastically on various points of the track and branches according to the rotation position of said coder disc. The collector arms (21a, 23a, 23b) and said terminals (22, 24a, 24b) are made of various materials. The material of the arms is elastic and thin and the material of the terminals is ductile and thick; said arms and terminals are joined by welding. The process proposes to obtain the terminals by die-cutting a first metal strip; the formation of segments and at least one appendix on a second metal strip; and the superposition and linking of said strips by welding.

## Description

### Field of the invention

This invention relates to an incremental coding device of the type including a coding wheel or disk, mounted on a rotary driving shaft, said coding disk including at least an electroconductive track having several branches which start from it, embodied on an insulating support, and integrating associated thereto collecting arms connected to terminals, which may elastically rest on different points of said track and branches in different rotation positions of the coding disk in order to provide pulsed signals.

The invention also relates to a process to fabricate said coding device.

### Background of the invention

General structure characteristics of said coding device are well-known, a great number of embodiments thereof being known in the state of the art.

However, for its fabrication purpose, we find the problem that the device connection terminals have to be of an electroconductive ductile and thick material to facilitate said terminals folding and handling, while the coding disk collecting arms or collecting member have to be of an electroconductive, elastic and thin material, which means they cannot be made in a single piece.

For such aim, a fabrication process is known in the state of the art which proposes to produce the collecting arm-terminal subassembly from a same piece by carrying out a special laminate sectorial of the lengths depending on the terminal and the collecting arm, to confer suitable properties to them. The system, although it achieves effective results is expensive and difficult to put in practice.

Also, another fabrication process is known in which starting from a single piece, thicker terminals are obtained, by folding the material on itself, in certain lengths.

### Summary of the invention

The invention proposes a method alternative to the former ones, easy to implement and which provides very effective assemblies of terminal- current collecting arm, starting from the junction of two parts by welding.

The invention also proposes an incremental coding device obtained by means of mentioned process and which incorporates a cutoff switch driven by an axial displacement of the coding wheel driving shaft.

The essential characteristics of the device disclosed are detailed in claim 1.

Other advantageous features of the invention appear described in dependent claims 2 to 6.

On its hand, the proposed process is described in its essential features in claim 7.

Other advantageous details of said process are detailed in dependent claims 9 to 13.

In order this invention can be easily understood, following description of an embodiment illustrated with drawings is provided.

However, it has to be understood that this invention is not limited to the details of construction and arrangement of its parts illustrated in the attached drawings, because this invention (and its inventive concept) is capable of being embodied in a different way, with variations and modifications and to be embodied or put into practice in different ways which are within the scope of the dependent claims.

### Brief description of the drawings

In said drawings:
Fig. 1 is a cross section of an elevation view of an incremental coding device according to the invention.
Fig. 2 is a ground plan view of a detail of a key aspect of the invention.
Fig. 3 - 6 are elevation views corresponding to some of the different steps comprised in a process to fabricate an incremental coding device according to the invention.
Fig. 7 is an elevation view of a finished key subassembly, obtained according to the process of the invention, pertaining to mentioned device.
Fig. 8 is an elevation view of an enlarged detail of collecting arms used in the proposed coding device.

### Detailed description of an embodiment

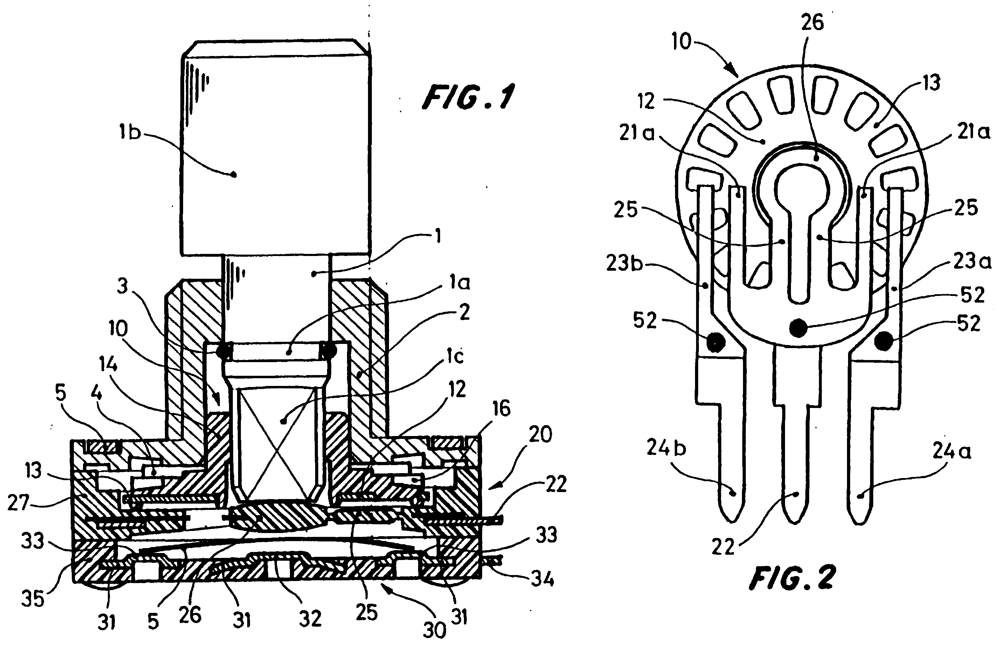

In fig. 1, a coding device can be seen which comprises _ assembling by stacking up a subassembly of cutoff switch 30, a subassembly bearing collecting arms and terminals 20, a subassembly bearing a coding wheel 10, and a guiding frame 3 and a driving shaft 1, all of them joined by means of a clamp-like laminar part 5, forming, as a whole, a coding device fabricated according to the process of the invention.

When considering the details the driving shaft 1 can be seen inserted in the guiding frame 2 so that it can rotate and at same time it can axially move along a certain run, and an elastic o-ring 3 placed in a circumferential groove 1a of said driving shaft 1 which in association to an annular elastic member 4 acts as retaining stop, generating a series of pauses, corresponding to a series of significant angular positions (which produce one or another signal level). The driving shaft 1 is ended at its top by a button 1b, and at its lower end by a facetted portion with two flat faces 1c, parallel to each other and to the spin axis which are socketed in a body bearing the coding wheel, as it will be seen thereafter.

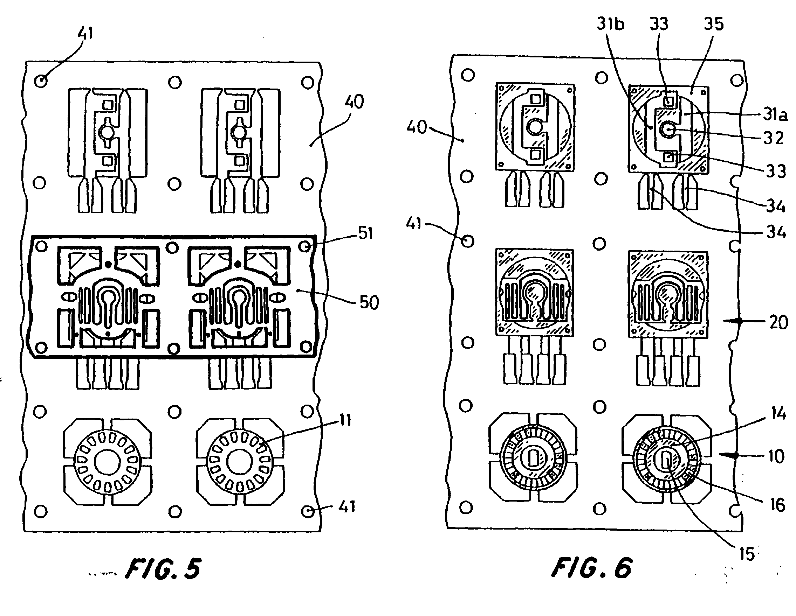

By the lower part of the guiding frame 2 the coding wheel 10 subassembly is inserted which comprises an electroconductive track 11 (see also Fig. 2 and 5) provided with a circular crown-shaped internal portion 12 from whose external edge is protruding a plurality of branches 13, and by a wheel body 14, in insulating material, which has a cylindric top portion in whose center it has a hole 15 (see also Fig. 6) with two parallel flat faces parallel to each other and to the spin axis and a flat lower portion which has an external toothed crown 16. Said coding wheel subassembly 10 remains joined to the driving shaft 1 inserted through a hole 15, so that said wheel 10 rotates integral with said shaft 1 when button 1b is rotated and it remains immobile when said button 1b is axially pressed downwards allowing the displacement thereof through it.

Between the guiding frame 2 and the toothed crown 16 of the coding wheel 10, said annular elastic retaining member 4 is interposed which acts in cooperation with the teeth of said toothed crown 16, as angular position stabilizer.

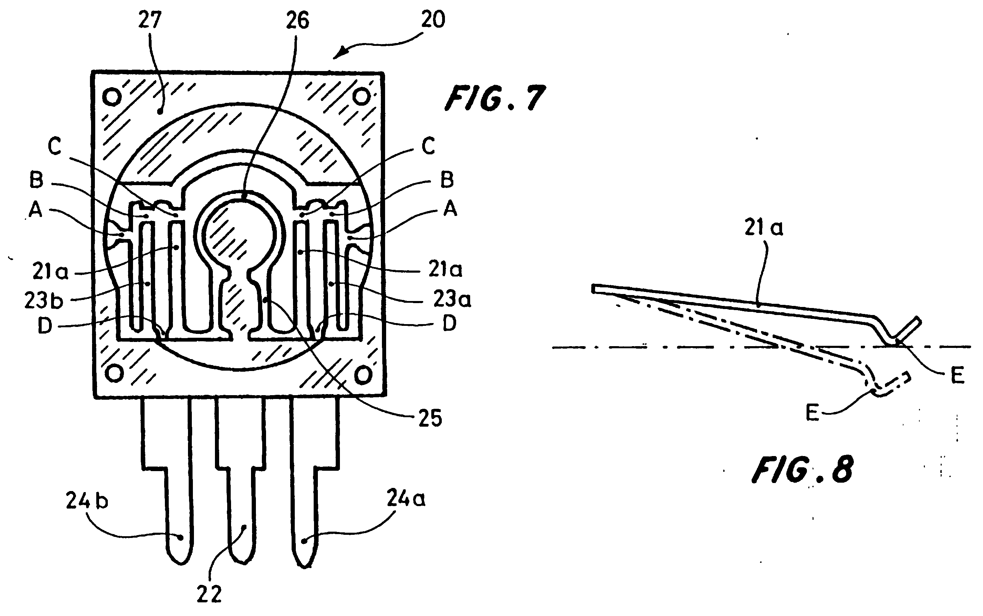

Under the guiding frame 2 and the coding wheel 10, there is located the subassembly bearing the collecting arms 20 which is formed by two internal collecting arms 21a (see also Fig. 2 and 7) jointly connected to a central terminal 22, two external collecting arms 23a, 23b, right and left, respectively connected to respective external terminals 24a and 24b, right and left, respectively, a central laminar appendage 25 of flexible material having been provided, ended by a ring 26 covered on both sides with insulating material, and a supporting body 27 of said collecting arms of insulating material. Said subassembly 20 bearing the collecting arms, which have available centering means with respect to the guiding frame 2, remains located so that the internal collecting arms 21a are elastically resting on the internal portion 12 of the electroconductive track 11, and the external collecting arms 23a, 23b are resting on the branches 13 path of said electroconductive track 11 or on the inter-branches, insulating areas, depending on the rotation angular position. On its side, the ring 26 covered with an insulating material, remains in a position under the lower end of the driving shaft 1, centered with its rotation shaft.

The assembly remains closed, at its bottom, by a cutoff switch 30 subassembly , composed of two contact arms 31 (see also fig. 6), one of them with a central contact point 32 and the other with peripheral contact points 33, connected to corresponding terminals 34 of a body supporting a cutoff switch 35 of insulating material. Said cutoff switch subassembly 30 remains positioned with respect to the terminals subassembly 20 by means of centering means so that the central contact point 31 remains located, centered with the spin axis, under the ring lower face 26 covered with insulating material. A spherical cap 5 of elastic and electroconductive material, membrane-like, is located with its convex face upwards, interposed between said ring 26 covered with insulating material and said contact point 32 resting by its peripheral edge on the peripheral contact points 33, so that when pressing the button 1b downwards, the driving shaft 1 goes down and the lower end thereof presses the ring 26 covered with insulating material, which bending the appendage 25, goes down pressing the spherical cap 5 vertex which bends going down until it touches the central contact point 32, electrically connecting it with the peripheral contact points. When the downwards pressure on button 1b stops, the driving shaft recovers its initial position being upwardly pushed by the spherical cap 5 and appendage 25 elastic recovery force.

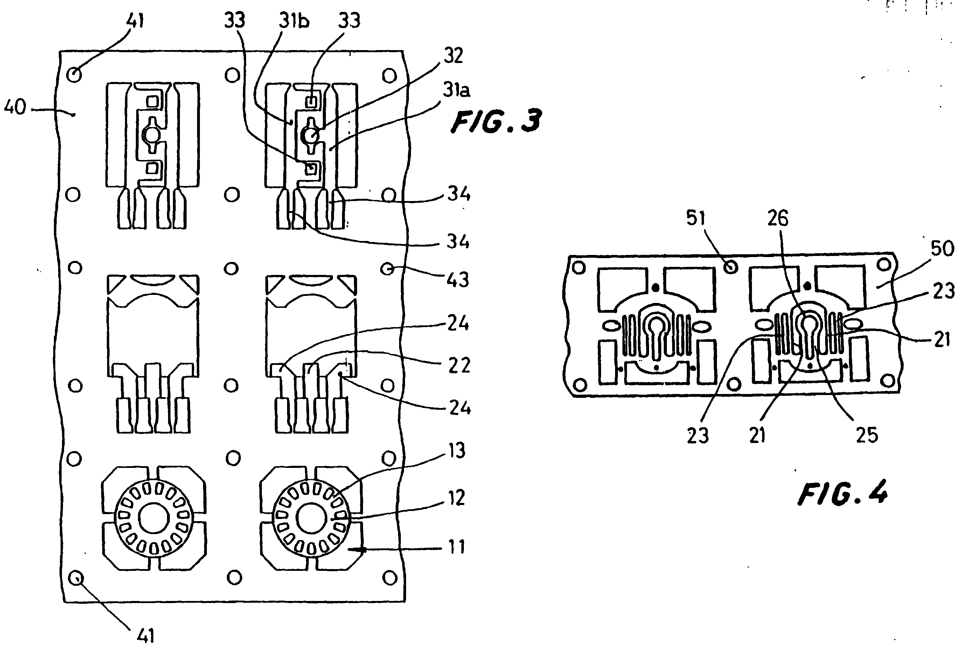

In Fig. 3 - 6 a correlation of the main steps followed by the fabrication process can be seen.

In Fig. 3, showing the first step, a portion of a first continuous band 40 of ductile, thick and electroconductive material can be seen, provided, at regular intervals with a series of guiding holes 41 to transfer said band, in which they have being formed in a continuous way by die-cut; at an upper strip portion of the band, a series of contact arms pairs 31, one of them having a central contact point 32 and the other having peripheral contact points 33, connected to corresponding terminals 34; at a central strip portion, a series of three terminals assemblies, the central terminal 22 and the external terminals 24a, 24b; and at a lower (as appears in the figure) strip portion a series of electroconductive tracks 11 having a circular crown-shaped internal portion 12 from the external edge of which a plurality of branches 13 project.

In Fig. 4, showing the second step, a portion of a second continuous band 50 of elastic, thin, electroconductive material can be seen, provided at regular intervals with a series of transfer holes 51, in which a series of two internal segments 21, two external segments 23 and an appendage 25 ending by a ring 26, have being formed in a continuous way by die-cut.

The third and essential step of the process proposed, is illustrated by Fig. 5, in which a second band 50 can be seen superposed on a central strip portion of the first band 40, with the position guaranteed by the coincidence of the transfer holes 51 of the second band 50 with holes 43 of the central strip of the first band 40, both bands being joined to each other by means of welding points 52. In Fig. 2, this main feature of the invention has being schematically illustrated, which allows to see how the terminal-collecting arm assemblies are obtained from welding very concrete mechanical and electrical characteristic parts with other having differentiated mechanical and electrical characteristics.

Fig. 6 illustrates the fourth step. There, it can be seen how on the first band 40 and the second band 50, joined to each other, several parts have being over-moulded with an insulating material which constitute: at a upper strip portion of the band a cutoff switch body 35; at the central strip portion a body bearing the collecting arms 27; and at a lower bottom strip portion the coding wheel body 14 having hole 15 and toothed crown 16, the surplus of the second band 50 having been withdrawn.

A fifth step, not shown in the drawings, consists of taking apart the surplus of the first band 40, with which they are obtained; from the top strip, finished cutoff switch subassemblies 30; from the lower strip finished coding wheels 10 subassemblies and from the central band, subassemblies bearing the collecting arms one operation of which is still to be finished.

In Fig. 7, a subassembly bearing the already finished collecting arms, in which cuts have being made at strategic points A, B, C and D to electrically take apart the assemblies of internal collecting arms 21a connected to the central terminal 22 of the external collecting arms 23a connected to the external terminals 24 and folds E have being formed (see Fig. 8) at the end of the resulting collecting arms 21a and 23a to provide them with suitable contact points, and said arms have been folded to a certain angle to provide them with the possibility of an elastic support on the collecting wheel 10 electroconductive track 11.

## Claims

**1**. Incremental coding device of the type comprising a coding wheel or disk, mounted on a rotary driving shaft, said coding disk including at least an electroconductive track with several branches which start from it, embodied on an insulating support and integrating associated thereto collecting arms connected to terminals, which may be elastically supported on different points of said track and branches, in several rotation positions of said coding disk and to provide pulsed signals
**characterized in that**
said collecting arms and said terminals are made of different materials, the material of the collecting arms being elastic and thin and the material of the terminals being ductile and thick, both electroconductive and said collecting arms and terminals are joined to each other by welding.

**2**. Coding device, according to claim 1, characterized in that said collecting arms connected to terminals are embedded in a supporting part of electrically insulating plastic material so that each terminal and collecting arm assembly remains electrically insulated from the other assemblies.

**3**. Coding device, according to claim 1, characterized in that the shape of the collecting arms and the elastic behaviour of the material thereof guarantees the contact of the end of each arm on one or another point of the electroconductive track and non conductor branches or area between said branches.

**4**. Coding device, according to claim 1, characterized in that said electroconductive track possesses a circular crown-shaped internal portion from the external edge of which a plurality of branches radially project and said collecting arms are in a number of four, located parallel, the two central arms may be permanently supported on said track continuous internal portion and both connected to a central terminal, and the two of the sides, right or left, may be supported on the conductor area of said track radial branches, or on one or another of the inter-branches insulating areas, depending on the coding wheel angular position and independently connected to respective right and left side terminals.

**5**. Coding device according to claim 4 characterized in that under said collecting arms and coding wheel and centered with said driving shaft, an axially driven cutoff switch having an electroconductive cap is arranged, a part of electrically insulating material having be arranged, interposed between the driving shaft lower end, acting as push-button and the cap of said cap cutoff switch, said electrically insulated part being formed by a ring covered on both sides with an insulating plastic material.

**6**. Device, according to claim 5, characterized in that said ring is formed at the end of a laminar appendage of flexible material and attached joined to the central collecting arms and interposed between them.

**8**. Process to fabricate an incremental coding device, characterized in that it comprises following steps:
forming terminals by die-cutting on a first electroconductive, continuous, metallic band of ductile and thick material;
forming segments and at least an elastic appendage on a second continuous metallic band of an electroconductive, elastic, thin material;
superposition of said second band on said first band and assemblage of the bands by means of welding of a plurality of points of both of them, so that the segments become integral to the terminals;
moulding insulating parts on some portions of said first and second bands joined to each other by welding;
cut of a part of said segments in order to form collecting arms and electrical split of the subassemblies of arms and terminals.

**8**. Process, according to claim 7, characterized in that on a third band it is formed by die-cutting some coding wheels, on which it is then performed an over moulding providing a support body.

**9**. Process, according to claim 7, characterized in that on a fourth band it is formed by die-cutting terminals and contact tracks of a cutoff switch.

**10**. Process, according to claim 7, characterized in that on some portions of said first band, they are formed also by die-cutting next to each terminal assembly another assembly of terminal and contact arms intended to constitute a cutoff switch, and on another neighbouring part a coding wheel and in that on said terminal and contact arms and coding wheel assemblies an over-moulding is performed so that corresponding support bodies are obtained.

**11**. Process, according to claim 7, characterized in that an end annular portion of said elastic appendage is covered on plastic in the over moulding phase, so that it constitute and electroinsulated flexible element.

**12**. Process, according to claim 8, characterized in that a rotatable driving shaft is associated to said coding wheel said driving shaft being capable to axially move along a certain run.

**13**. Process, according to claim 8, characterized in that said coding device is obtained by stacking up, the subassemblies bearing the driving shaft and coding wheel, the support bearing the collector arms and elastic appendage having an insulated end part and cutoff switch body, so that said driving shaft rest by its inner end on the insulated end of said appendage, which at the same time is positioned on an membrane-like electro-conducting spherical cap superimposed to the cutoff switch in order its command.
